# EUROPÄISCHE PATENTSCHRIFT

(11) **EP 3 848 620 B1**
(45) Veröffentlichungstag und Bekanntmachung des Hinweises auf die Patenterteilung: **03.04.2024**
(21) Anmeldenummer: 20215462.1
(22) Anmeldetag: 18.12.2020
(51) Int. Cl.: F16K 15/02, F04C 14/24, F16K 15/04

(54) **VENTILANORDNUNG, INSBESONDERE RÜCKSCHLAGVENTIL MIT EINGEPRESSTEM KUGELHALTER**
VALVE ASSEMBLY, IN PARTICULAR CHECK VALVE WITH PRESSED-IN BALL RETAINER
AGENCEMENT DE SOUPAPE, EN PARTICULIER UN CLAPET ANTI-RETOUR DOTÉ D'UN SUPPORT À BILLE ENFONCÉ

(30) Priorität: 13.01.2020 DE 102020100590
(43) Veröffentlichungstag der Anmeldung: 14.07.2021
(73) Patentinhaber: Schwäbische Hüttenwerke Automotive GmbH, 73433 Aalen (DE)
(72) Erfinder: JÄGGLE, Gerd, 88521 Ertingen (DE); EHRINGER, Michael, 88427 Bad Schussenried (DE); WIEBEL, Georg, 88284 Wolpertswende (DE)
(74) Vertreter: SSM Sandmair

(56) Entgegenhaltungen:
- EP-A1- 3 361 069
- DE-A1- 4 016 874
- DE-T2- 69 922 191
- DE-U1-202016 100 946

## Beschreibung

Die Erfindung betrifft eine Ventilanordnung, welche angepasst ist, eine Fluidströmung in eine erste Richtung, insbesondere Fließrichtung, zuzulassen und in eine zweite, der ersten Richtung entgegengesetzte Richtung, insbesondere Fließrichtung, zu blockieren. Die Ventilanordnung kann als Rückschlagventil ausgebildet sein oder zumindest als Rückschlagventil wirken. Die Ventilanordnung kann für die Verwendung oder den Einbau in eine Förderpumpe angepasst sein. Mithin betrifft die Erfindung auch eine Förderpumpe, welche eine solche Ventilanordnung umfasst. Die Pumpe kann beispielsweise eine Öl- oder Kraftstoffpumpe sein. Die Pumpe kann beispielsweise einen Hydromotor oder ein Getriebe, wie z. B. ein Fahrzeuggetriebe oder ein Getriebe eines Kraftfahrzeugs, mit Fluid versorgen, insbesondere zur Schmierung und/oder Kühlung und/oder Betätigung von Komponenten des Getriebes. Sie kann beispielsweise mit dem Getriebe eine Getriebeeinheit bilden oder an einem Getriebe befestigt sein oder zumindest strömungstechnisch, insbesondere fluidkommunizierend, mit dem Getriebe verbunden sein. Grundsätzlich kann mit der Pumpe ein Verbrennungsmotor, insbesondere ein Verbrennungsmotor eines Kraftfahrzeugs, mit Fluid versorgt werden, insbesondere zur Schmierung und/oder Kühlung. Die Pumpe kann Teil einer Pumpe-Motor-Einheit sein. Die Pumpe-Motor-Einheit kann einen Elektromotor zum Antrieb der Pumpe umfassen. Die Pumpe und der Elektromotor können zusammen eine Einheit bilden, die als Einheit handhabbar und/oder an weiteren Komponenten, wie z. B. an dem genannten Getriebe befestigt sein kann.

Rückschlagventile für Pumpen sind im Stand der Technik als solche bekannt. Beispielsweise ist aus der DE 10 2017 219 004 A1 ein ventilfederlos ausgeführtes Rückschlagventil für eine elektromotorisch betriebene Ölpumpe bekannt. Das Rückschlagventil weist einen kugelförmigen Schließkörper auf, welcher in einem Auslasskanal der Pumpe angeordnet ist. Ein Herausfallen des Schließkörpers aus einer Auslassöffnung des Auslasskanals wird durch einen Schließkörperhalter verhindert, der über die Auslassöffnung in den Auslasskanal während der Montage eingeführt wird und mit einer Innenwand des Auslasskanals formschlüssig verschnappt. Der Schließkörperhalter liegt im verschnappten Zustand an einem Absatz des Auslasskanals an, wodurch eine Bewegung des Schließkörperhalters entgegen die Strömungsrichtung verhindert wird. Eine Bewegung des Schließkörperhalters in Strömungsrichtung wird durch Fügekonturen des Schließkörperhalters verhindert, die an einer von dem Innenumfang des Fluidkanals gebildeten Hinterschnittkante anliegen. Bei der Montage des Schließkörperhalters muss immer sichergestellt sein, dass dieser sicher mit dem Gehäuse verschnappt ist, wodurch im Auslasskanal entsprechende Hinterschneidungen geschaffen werden müssen und besondere Anforderungen hinsichtlich der Maßhaltigkeit an die Innenkontur des Auslasskanals und des Schließkörperhalters gestellt werden.

Weitere Ventilanordnungen sind aus DE 40 16 874 A1, DE 20 2016 100946 U1 und DE 699 22 191 T2 bekannt.

Der vorliegenden Erfindung liegt die Aufgabe zugrunde, eine Ventilanordnung mit einem Schließkörperhalter zu schaffen, welcher einfach herzustellen und zu montieren ist. Ferner ist es eine Aufgabe, eine Förderpumpe mit einer solchen Ventilanordnung bereitzustellen. Die Aufgaben werden mit den Merkmalen des Anspruchs 1 und des nebengeordneten Anspruchs 13 gelöst. Vorteilhafte Weiterbildungen ergeben sich aus den abhängigen Ansprüchen, der Beschreibung und den Figuren.

Die Erfindung geht von einer Ventilanordnung, insbesondere einem Rückschlagventil aus, welche angepasst ist, eine Fluidströmung in eine erste Richtung zuzulassen und in eine zweite, der ersten Richtung entgegengesetzte Richtung zu blockieren. Die erste Richtung kann beispielsweise von einer Pumpenkammer einer Förderpumpe zu einem Verbraucher weisen. Die zweite Richtung kann beispielsweise von einem Verbraucher oder einer anderen Pumpe, beispielsweise in einem System, welches eine Haupt- und Zusatzpumpe oder Hilfspumpe aufweist, zu der Pumpenkammer weisen. Um zu verhindern, dass Fluid, welches während des Betriebs der Pumpe von der Pumpenkammer über den Fluidkanal abgefördert wird oder abfließt, ist die Ventilanordnung vorgesehen, welche die Fluidströmung in die erste Richtung zulässt und in die zweite Richtung blockiert, um ein Zurückfließen von Fluid in die Pumpenkammer zu verhindern. Durch die Ventilanordnung lässt sich die Pumpe abschalten, wobei der Fluiddruck, der mitunter relativ hohe Werte annehmen kann, in dem Fluidsystem, welches in der ersten Richtung nach der Ventilanordnung angeordnet ist, gehalten wird.

Die Ventilanordnung umfasst einen Fluidkanal, insbesondere einen Auslasskanal, einen Ventilsitz, der insbesondere in dem Fluidkanal gebildet sein kann, und einen in dem Fluidkanal angeordneten, beispielsweise rotationssymmetrischen oder kugelförmigen, Schließkörper. Der Fluidkanal kann beispielsweise eine Pumpenkammer der Förderpumpe mit der, beispielsweise von einem Pumpengehäuse gebildeten, Auslassöffnung, über die der Fluidkanal nach außen mündet, verbinden. Der Fluidkanal kann von einem Pumpengehäuse der Förderpumpe oder einem separaten Bauteil, welches an dem Pumpengehäuse angebracht ist, gebildet sein. In dem Fluidkanal kann ein Ventilsitz angeordnet sein. Der Ventilsitz kann von einer Innenumfangswand des Teils, welches den Fluidkanal bildet, beispielsweise dem separaten Bauteil oder dem Pumpengehäuse, gebildet sein. Alternativ kann der Ventilsitz über ein separates Bauteil, welches in den Fluidkanal eingesetzt ist, gebildet sein. Der Ventilsitz kann beispielsweise eine kegel- oder kugelabschnittsförmige Innenumfangswand aufweisen, welche den Ventilsitz für den Schließkörper bildet. Wenn der Schließkörper an dem Ventilsitz, insbesondere der kugel- oder kegelabschnittsförmigen Umfangswand, insbesondere umlaufend anliegt, wird die Fluidströmung in die zweite Richtung blockiert. Insbesondere kann das Fluid, welches in Bezug auf die erste Richtung nach dem Schließkörper angeordnet ist, den Schließkörper gegen den Ventilsitz drücken, beispielsweise wenn der Druck in dem Fluid nach dem Schließkörper höher ist als in dem Fluid vor dem Schließkörper.

Wenn Fluid in die erste Richtung fließt oder der Druck vor dem Schließkörper höher ist als nach dem Schließkörper, wird der Schließkörper von dem Ventilsitz abgehoben und Fluid kann in die erste Richtung fließen.

Allgemein ausgedrückt, ist der Schließkörper konfiguriert, in einer Position, in der er an dem Ventilsitz anliegt, eine Fluidströmung in die zweite Richtung zu verhindern und, wenn der Schließkörper von dem Ventilsitz zumindest teilweise oder vollständig, abgehoben ist, eine Fluidströmung in die erste Richtung zuzulassen.

Der Schließkörper kann rotationssymmetrisch, wie z. B. kegel- oder kegelstumpfförmig, ausgebildet sein oder zumindest einen für die Anlage an dem Ventilsitz vorgesehenen Abschnitt bilden, dessen Außenfläche einen Teil einer Kegelmantelfläche bildet. In einer vorteilhaften Ausführung ist der Schließkörper eine Kugel oder bildet zumindest einen für die Anlage an dem Ventilsitz vorgesehenen Abschnitt, dessen Außenfläche einen Teil einer Kugeloberfläche bildet.

Die Ventilanordnung umfasst ferner einen in dem Fluidkanal angeordneten Schließkörperhalter, der konfiguriert ist, in einer Position des Schließkörpers, in der der Schließkörper von dem Ventilsitz abgehoben ist, eine Bewegung des Schließkörpers in die erste Richtung einzuschränken. Beispielsweise kann der Schließkörper an dem Schließkörperhalter anliegen oder ihn berühren, wenn der Schließkörper in einer Position ist, in der er von dem Ventilsitz abgehoben ist. Beispielsweise kann sich der Ventilkörper zwischen der Position, in der der Schließkörper an dem Ventilsitz anliegt und einer Position, in der der Schließkörper an dem Schließkörperhalter anliegt, frei bewegbar sein. Insbesondere kann die Ventilanordnung ventilfederlos ausgebildet sein, das heißt, dass die Ventilanordnung ohne Feder auskommt, welche auf den Schließkörper wirkt. Der Schließkörper kann ohne Federbeaufschlagung angeordnet sein oder die Ventilanordnung kann als federloses Rückschlagventil ausgebildet sein. Beispielsweise kann der Schließkörper an dem Schließkörperhalter nicht anliegen oder von dem Schließkörperhalter entfernt sein oder in keiner mechanischen Wechselwirkung mit dem Schließkörperhalter sein, wenn der Schließkörper in der Position ist, in der er an dem Ventilsitz anliegt. Im Gegensatz zu einer Ventilanordnung, bei der sich eine Ventilfeder an dem Schließkörperhalter und dem Schließkörper abstützt, um diesen von dem Ventilkörperhalter zu dem Ventilsitz zu drücken, wodurch eine mechanische Wechselwirkung zwischen Schließkörper und Schließkörperhalter besteht, besteht bei einem ventilfederlosen Ventil keine mechanische Wechselwirkung zwischen Schließkörper und Schließkörperhalter, wenn der Schließkörper in der Position ist, in der er an dem Ventilsitz anliegt.

Allgemein bevorzugt kann der Schließkörper zwischen dem Ventilsitz und dem Schließkörperhalter angeordnet sein. Die Ventilanordnung kann einen Aufnahmeraum aufweisen, der zwischen dem Ventilsitz und dem Schließkörperhalter gebildet oder angeordnet und in dem der Schließkörper angeordnet ist. Der Aufnahmeraum kann eine Innenumfangswand aufweisen, welche von dem Pumpengehäuse oder dem Teil, welches den Fluidkanal bildet, gebildet ist und/oder den Aufnahmeraum umfangsseitig einfasst. Ein Innendurchmesser des Aufnahmeraums kann größer sein als ein Innendurchmesser des Fluidkanals vor, insbesondere unmittelbar vor dem Ventilsitz oder am Übergang zum Ventilsitz.

Der Außendurchmesser des Schließkörpers, insbesondere des rotationssymmetrischen oder kugelförmigen Schließkörpers, kann kleiner sein als der Innendurchmesser des Aufnahmeraums und größer sein als der Innendurchmesser des Abschnitts des Fluidkanals vor dem Ventilsitz, insbesondere unmittelbar vor dem Ventilsitz oder am Übergang zum Ventilsitz.

Der Schließkörperhalter kann überwindbar reibschlüssig, an einer Innenumfangswand des Fluidkanals, beispielsweise einer Schließkörperhalteraufnahme, gehalten sein. Alternativ oder zusätzlich kann der Schließkörperhalter überwindbar formschlüssig, an der Innenumfangswand des Fluidkanals, beispielsweise der Schließkörperhalteraufnahme, gehalten werden. Überwindbar heißt insbesondere, dass die Haltekraft der reib- oder formschlüssigen Verbindung von einer im Betrieb der Förderpumpe auf den Schließkörperhalter, insbesondere direkt und indirekt (beispielsweise über den Schließkörper), wirkenden, von der Fluidströmung im Fluidkanal verursachten Kraft, überwunden werden kann, um die formschlüssige oder die reibschlüssige Verbindung zu lösen und den Schließkörperhalter zu verschieben.

Der Schließkörperhalter ist überwindbar reibschlüssig oder überwindbar formschlüssig so fest an der Innenumfangswand des Fluidkanals, insbesondere der Schließkörperhalteraufnahme, gehalten, dass er insbesondere durch die während des Betriebs auf den Schließkörperhalter wirkenden Kraft relativ zu der Innenumfangswand in die erste Richtung verschiebbar ist oder verschiebbar sein kann. Das heißt, dass der Schließkörperhalter in einer Position, in der der Schließkörperhalter an der Innenumfangswand des Fluidkanals, insbesondere reibschlüssig oder/und überwindbar formschlüssig, gehalten ist, in die erste Richtung verschiebbar ist. Beispielsweise kann der Schließkörperhalter aus einer ersten Halteposition, in der er reibschlüssig oder überwindbar formschlüssig an der Innenumfangswand des Fluidkanals bzw. der

Schließkörperhalteraufnahme, welche beispielsweise von dem Fluidkanal gebildet sein kann, gehalten ist, insbesondere durch die während des Förderbetriebs auf den an dem Schließkörperhalter anliegenden Schließkörper und den Schließkörperhalter durch die Fluidströmung bewirkten Kräfte, in die erste Richtung in eine zweite Halteposition, in der eine Bewegung des Schließkörperhalters in die erste Richtung blockiert ist, verschiebbar sein. Beispielsweise kann, wenn der Schließkörperhalter in seiner ersten Halteposition ist, eine Bewegung des Schließkörperhalters in die zweite Richtung durch die reibschlüssige oder überwindbar formschlüssige Verbindung zwischen Schließkörperhalter und Innenumfangswand und/oder durch eine nicht-überwindbare formschlüssige Verbindung zwischen Schließkörperhalter und Fluidkanal, insbesondere dadurch, dass der Fluidkanal eine Anschlag- oder Axialanschlagfläche aufweist, an welcher der Schließkörperhalter in seiner ersten Halteposition anliegt oder anliegen kann, verhindert werden. In der zweiten Halteposition kann der Schließkörperhalter beispielsweise formschlüssig, insbesondere nicht-überwindbar formschlüssig, an einer Bewegung in die erste Richtung blockiert sein. Beispielsweise kann der Schließkörperhalter in der zweiten Halteposition an einem separaten Bauteil, welches separat von dem Bauteil ist, welches den Fluidkanal bildet, wie z. B. einem Gehäuse oder zweiten Gehäuse, anliegen. An dem separaten Bauteil oder zweiten Gehäuse kann das Pumpengehäuse, welches in Ausführungsformen den Fluidkanal bilden kann, oder die Förderpumpe befestigt sein. Insbesondere kann dadurch, dass der Schließkörperhalter in der zweiten Halteposition an dem separaten Bauteil anliegt, eine weitere Verschiebung des Schließkörperhalters in die erste Richtung verhindert werden, auch dann, wenn sich beispielsweise aufgrund von sich ändernden Betriebstemperaturen der Förderpumpe oder des zu fördernden Fluids der Schließkörperhalter und die Schließkörperhalteraufnahme unterschiedlich stark ausdehnen, beispielsweise dann, wenn sie aus unterschiedlichen Materialien gebildet sind oder unterschiedliche Wärmeausdehnungskoeffizienten aufweisen.

Alternativ oder zusätzlich kann das separate Bauteil ein an dem Pumpengehäuse befestigtes Bauteil sein, welches separat von dem Pumpengehäuse und dem Schließkörperhalter ist. Optional kann das Bauteil in dem Fluidkanal angeordnet und/oder an dem Fluidkanal, beispielsweise an einer Innenumfangswand des Fluidkanals, befestigt sein.

Eine überwindbare formschlüssige Verbindung kann beispielsweise dadurch gebildet werden, dass die Innenumfangswand eine Vertiefung und der Schließkörperhalter einen Vorsprung, welcher in die Vertiefung eingreift, oder die Innenumfangswand einen Vorsprung und der Schließkörperhalter einen Vertiefung, in welche der Vorsprung eingreift, aufweisen, wobei der Vorsprung durch Ausüben einer, insbesondere durch die Fluidströmung verursachten, Axialkraft auf den Schließkörperhalter aus der Vertiefung herausgedrückt wird, beispielsweise indem sich der Vorsprung elastisch oder plastisch verformt oder der Vorsprung elastisch oder federnd angeordnet ist.

In Ausführungen kann ein Abschnitt des Schließkörperhalters aus dem Fluidkanal oder dem Pumpengehäuse herausragen, wenn der Schließkörperhalter in der Schließkörperhalteraufnahme angeordnet ist, insbesondere wenn sich der Schließkörper in seiner ersten Halteposition und/oder zweiten Halteposition befindet. Beispielsweise kann der Schließkörperhalter in der zweiten Halteposition, optional auch in der ersten Halteposition teilweise in das zweite Gehäuse, beispielsweise in das Getriebegehäuse, an der die Pumpe-Motor-Einheit befestigt wird oder ist, ragen.

In der zweiten Halteposition kann der Schließkörperhalter zusätzlich reibschlüssig oder formschlüssig, beispielsweise an der Innenumfangswand des Fluidkanals oder der Innenumfangswand der Schließkörperhalteraufnahme gehalten sein, um eine Bewegung des Schließkörperhalters relativ zu der Innenwand in die zweite Richtung zu verhindern.

In Ausführungen kann der Schließkörperhalter aus Kunststoff gebildet, insbesondere ein Spritzgussteil sein. Hierdurch kann der Schließkörperhalter einfach und kostengünstig hergestellt werden und die an ihn gestellten konstruktiven und funktionalen Anforderungen erfüllen.

Der Vorteil der erfindungsgemäßen Anordnung ist, dass die Einpresskraft des Schließkörperhalters lediglich für den Transport der Förderpumpe ausgelegt sein braucht, d.h. dass die Haltekraft nur für den Transport ausreichend sein braucht. Dadurch kann der Schließkörperhalter unter Umständen ohne Hilfsmittel per Hand in den Fluidkanal eingesetzt werden. Für die Montage wird der Schließkörper in den Aufnahmeraum der Ventilanordnung eingelegt und anschließend wird der Schließkörperhalter in den Fluidkanal, insbesondere in die Schließkörperhalteraufnahme, zur Bildung eines, insbesondere überwindbaren, Reibschlusses oder eines, insbesondere überwindbaren, Formschlusses mit der Innenumfangswand eingesetzt. Ein Herausfallen des Schließkörperhalters und des Schließkörpers wird durch den Reibschluss oder den überwindbaren Formschluss zwischen der Innenumfangswand und dem Schließkörperhalter verhindert. Somit lässt sich die Förderpumpe einfach transportieren und einfach an dem weiteren oder zweiten Gehäuse montieren, ohne dass eine besondere Rücksicht auf den Schließkörper bzw. den Schließkörperhalter genommen werden muss. Andererseits lässt sich der Schließkörperhalter einfach herstellen, da an ihn nur geringe Maßhaltigkeitsanforderungen gestellt werden. Zudem lässt sich der Schließkörperhalter einfach an dem Fluidkanal montieren, da er nicht einrasten oder nicht unlösbar einrasten braucht. Dadurch ist der Fluidkanal einfacher zu fertigen, da er keine Hinterschneidungen für eine unlösbare Verrastung aufweisen braucht.

Beispielsweise kann der Weg, den der Schließkörper von der Position, in der er an dem Ventilsitz anliegt, bis zu einer Position, in der der Schließkörper an dem Schließkörperhalter anliegt, bewegbar ist, in der zweiten Halteposition des Schließkörperhalters größer sein als in der ersten Halteposition des Schließkörperhalters. Alternativ oder zusätzlich kann der Abstand zwischen dem Ventilsitz und dem Schließkörperhalter in der zweiten Halteposition größer sein als in der ersten Halteposition. Insbesondere kann der Abstand um den Weg zunehmen, den der Schließkörperhalter aus der ersten Halteposition in die zweite Halteposition verschiebbar ist. Wenn der Schließkörper in einen Kontakt mit dem Schließkörperhalter bewegt wird bzw. an dem Schließkörperhalter anliegt, wenn der Schließkörperhalter in seiner ersten Halteposition ist, wird die Bewegung des Schließkörpers zumindest eingeschränkt, wobei sich der Schließkörper und der Schließkörperhalter zusammen in die erste Richtung in die zweite Halteposition des Schließkörperhalters verschieben lassen, insbesondere unter Überwindung der durch den Reibschluss zwischen Schließkörperhalter und Innenumfangswand bewirkten Reibkraft oder der durch den überwindbaren Formschluss zwischen Schließkörperhalter und Innenumfangswand bewirkten Haltekraft. In der zweiten Halteposition des Schließkörperhalters ist die Einschränkung der Bewegung des Schließkörpers in die erste Richtung dergestalt, dass eine Bewegung des Schließkörpers in die erste Richtung blockiert und nicht nur erschwert wird.

Allgemein bevorzugt ist, dass der Schließkörperhalter in der zweiten Halteposition reibschlüssig an der Innenumfangswand des Fluidkanals oder der Schließkörperhalteraufnahme gehalten wird, um beispielsweise die Bewegung des Schließkörperhalters in die zweite Richtung zu verhindern. Alternativ oder zusätzlich ist bevorzugt, dass der Schließkörperhalter formschlüssig in dem Fluidkanal oder einem von der Innenwand des Fluidkanals separaten Bauteils, beispielsweise dem zweiten Gehäuse, an dem sich der Schließkörperhalter in die erste Richtung abstützt bzw. daran anliegt, gehalten wird, um die Bewegung des Schließkörperhalters in die erste Richtung zu verhindern, wenn der Schließkörperhalter in seiner zweiten Halteposition ist.

Beispielsweise kann der Reibschluss oder der Formschluss zwischen der Innenwand und dem Schließkörperhalter so angepasst oder konfiguriert sein, dass die Kraft, die zum Überwinden des Reibschlusses oder des Formschlusses erforderlich ist, größer ist als die Summe der Gewichtskräfte des Schließkörperhalters und des Schließkörpers. Hierdurch lässt sich verhindern, dass der Schließkörperhalter und der Schließkörper aus dem Aufnahmeraum bzw. dem Schließkörperhalteabschnitt herausfallen oder aus der ersten Halteposition bewegt werden.

Alternativ oder zusätzlich kann der Reibschluss oder der Formschluss zwischen der Innenwand und dem Schließkörperhalter so angepasst oder konfiguriert sein, dass die Kraft, die zum Überwinden des Reibschlusses oder des Formschlusses erforderlich ist, kleiner ist als eine Kraft, die von der in dem Fluidkanal in die erste Fließrichtung gerichteten Fluidströmung auf den Schließkörper ausgeübt oder ausübbar ist. Hierdurch wird erreicht, dass der Schließkörperhalter durch die Fluidströmung aus der ersten Halteposition in seine zweite Halteposition verschoben werden kann.

Der Schließkörperhalter kann einen, insbesondere ringförmigen Halteabschnitt aufweisen, mit dem der Schließkörperhalter überwindbar reibschlüssig oder überwindbar formschlüssig an der Innenumfangswand des Fluidkanals, insbesondere der Schließkörperhalteraufnahme gehalten ist. Der ringförmige Halteabschnitt und/oder der Schließkörperhalter als solcher kann beispielsweise einen Außendurchmesser aufweisen, der größer ist als die Länge des Halteabschnitts und/oder des Schließkörperhalters, mit der er sich in die Längsrichtung des Fluidkanals erstreckt. Dadurch benötigt der Schließkörperhalter nur wenig Bauraum.

Optional kann der Schließkörperhalter einen oder mehrere Vorsprünge, insbesondere Stege aufweisen, die von einem Innenumfang des ringförmigen Halteabschnitts nach innen ragen. Beispielsweise können die nach innen ragenden Vorsprünge in dem von dem ringförmigen Halteabschnitt eingefassten Bereich, insbesondere in dessen Zentrum, miteinander verbunden sein. Alternativ können die nach innen ragenden Vorsprünge jeweils ein nach innen ragendes freies Ende bilden, wobei die freien Enden der nach innen ragenden Vorsprünge unverbunden sind. Beispielsweise können die freien Enden der nach innen ragenden Vorsprünge einen Durchgang einfassen.

Der Schließkörperhalter kann zweckmäßigerweise konfiguriert sein, um von der durch den Fluidkanal fließenden Fluidströmung durchströmt zu werden. Insbesondere kann die Fluidströmung durch den von dem ringförmigen Halteabschnitt eingefassten Bereich fließen und beispielsweise den oder die von dem ringförmigen Halteabschnitt nach innen ragenden Vorsprünge umströmen. Beispielsweise kann die Fluidströmung durch den Schließkörper, insbesondere zwischen benachbarten Vorsprüngen hindurchfließen. Die Ventilanordnung, insbesondere der Schließkörper und der Schließkörperhalter sind vorzugsweise so ausgebildet, dass die Fluidströmung durch den Schließkörperhalter, insbesondere in die erste Richtung, hindurchströmen kann, insbesondere wenn der Schließkörper an dem Schließkörperhalter, beispielsweise an dem mindestens einen Vorsprung, anliegt. Somit wird sichergestellt, dass der Schließkörper, wenn er an dem Schließkörperhalter anliegt, die Fluidströmung in die erste Richtung nicht blockieren kann.

Beispielsweise kann der Schließkörper an dem einen oder den mehreren Vorsprüngen anliegen, wenn der Schließkörperhalter die Bewegung des Schließkörpers einschränkt oder blockiert. Das heißt, der Schließkörper kann an dem mindestens einen Vorsprung anliegen und den Schließkörperhalter aufgrund der Kraft, den die Strömung auf den Schließkörper ausübt, aus der ersten Halteposition in die zweite Halteposition unter Überwindung der Kraft der reibschlüssigen Verbindung zwischen Schließkörperhalter und Innenwand verschieben. Wenn der Schließkörperhalter in seiner zweiten Halteposition ist, kann der Schließkörper an dem mindestens einen Vorsprung anliegen, wobei der Schließkörperhalter bzw. dessen mindestens einer Vorsprung die Bewegung des Schließkörpers in die erste Richtung blockiert.

Alternativ oder zusätzlich können der eine oder die mehreren Vorsprünge auf der zu dem Ventilsitz zugewandten Seite eine Vertiefung bilden, in der der Schließkörper teilweise aufnehmbar ist, insbesondere dann, wenn der Schließkörper an dem mindestens einen Vorsprung anliegt. Durch die Vertiefung kann der Schließkörper beim Transport der Ventilanordnung bzw. der Förderpumpe seitliche Bewegungen, d. h. Bewegungen des Schließkörpers quer zur Strömungsrichtung oder zur Längsrichtung des Fluidkanals verhindern oder erschweren. Insbesondere können so Klappergeräusche vermieden werden.

Ein weiterer Aspekt der Erfindung betrifft eine Förderpumpe, welche die hierin beschriebene Ventilanordnung umfasst. Die Förderpumpe kann beispielsweise als Drehschieberpumpe, Pendelschieberpumpe, Flügelzellenpumpe oder Zahnradpumpe, d.h. Innenzahnradpumpe oder Außenzahnradpumpe, ausgestaltet sein. Die Förderpumpe umfasst ferner eine Pumpenkammer und ein um eine Drehachse drehbares Förderelement, welches in der Pumpenkammer angeordnet ist. Durch Drehung des Förderelements um die Drehachse kann die Förderpumpe Fluid von einem Einlasskanal in einen Auslasskanal fördern. Über den Fluidkanal, der bevorzugt den Auslasskanal bildet und der beispielsweise mit einem Ende zu der Pumpenkammer und mit seinem anderen Ende an die Auslassöffnung mündet, ist Fluid aus der Pumpenkammer zu der Auslassöffnung förderbar, insbesondere durch Drehen des Förderelements um die Drehachse. Die Ventilanordnung ist in dem Fluidkanal angeordnet oder zumindest teilweise von dem Fluidkanal gebildet.

Die Förderpumpe kann ein erstes Gehäuse, welches den Fluidkanal, nämlich einen ersten Fluidkanal oder Auslasskanal, bildet und ein zweites Gehäuse, an dem das erste Gehäuse befestigt ist, aufweisen. Wie weiter oben beschrieben, kann das zweite Gehäuse beispielsweise ein Getriebegehäuse oder ein anderes Gehäuse sein. Das zweite Gehäuse kann einen zweiten Fluidkanal mit einem Einlass oder einer Einlassöffnung aufweisen, der oder die in Übereinstimmung mit dem Auslass oder der Auslassöffnung des ersten Fluidkanals angeordnet ist. Hierdurch kann Fluid aus dem ersten Fluidkanal in den zweiten Fluidkanal fließen. Der zweite Fluidkanal kann insbesondere zu einem Fluidverbraucher führen.

Der Schließkörperhalter kann aus seiner ersten Halteposition, in der er überwindbar reibschlüssig oder überwindbar formschlüssig an der Innenwand des ersten Fluidkanals bzw. dessen Schließkörperhalteraufnahme gehalten ist, in die erste Richtung in die zweite Halteposition bewegt oder verschoben werden, in der eine Bewegung des Schließkörperhalters in die erste Richtung dadurch blockiert wird, dass der Schließkörperhalter axial an dem zweiten Gehäuse oder einem an dem zweiten Gehäuse eingesetzten Teil anliegt. Hierdurch wird in der zweiten Halteposition ein Formschluss zwischen dem Schließkörperhalter und dem zweiten Gehäuse hergestellt, der eine Verschiebung des Schließkörperhalters in die erste Richtung blockiert.

Beispielsweise kann zwischen dem ersten Gehäuse und dem zweiten Gehäuse eine Dichtung angeordnet sein, welche den Bereich zwischen der Auslassöffnung des ersten Fluidkanals und der Einlassöffnung des zweiten Fluidkanals umfangsseitig umgibt und die Fluidverbindung zwischen dem ersten Fluidkanal und dem zweiten Fluidkanal nach außen hin abdichtet.

Beispielsweise kann die Dichtung den Schließkörperhalter umfangsseitig umgeben, wenn der Schließkörperhalter in seiner zweiten Halteposition ist.

Beispielsweise kann die bestimmungsgemäße Einbaulage der Förderpumpe so sein, dass der erste Fluidkanal mit seiner Auslassöffnung - bezogen auf die Schwerkraftrichtung - an die Unterseite des ersten Gehäuses mündet. Dadurch kann bewirkt werden, dass der Schließkörper aufgrund der Schwerkraft an dem Schließkörperhalter oder seinem mindestens einen Vorsprung oder in der von dem mindestens einen Vorsprung gebildeten Vertiefung anliegt.

Beispielsweise kann die Einlassöffnung des zweiten Gehäuses - bezogen auf die Schwerkraftrichtung - an die Oberseite des zweiten Gehäuses münden. Dadurch kann die Einlassöffnung des zweiten Fluidkanals vorteilhaft mit der Auslassöffnung des ersten Fluidkanals in Übereinstimmung gebracht werden, oder umgekehrt.

In Ausführungsformen kann die Längsrichtung des ersten Fluidkanals parallel oder koinzident oder schräg zu der Längsrichtung der Schließkörperhalteraufnahme angeordnet sein. Beispielsweise kann die Längsrichtung der Schließkörperhalteraufnahme parallel oder koinzident zu der Längsrichtung des zweiten Fluidkanals angeordnet sein.

Die Erfindung wurde anhand von mehreren Ausführungsbeispiele beschrieben. Im Folgenden wird eine Ausführungsform der Erfindung anhand von Figuren beschrieben. Die dabei offenbarten Merkmale bilden den Gegenstand der Erfindung einzeln und in jeglicher Merkmalskombination vorteilhaft weiter. Es zeigen:
- Figur 1: eine Förderpumpe, die an einem Getriebegehäuse befestigt ist, wobei eine Ventilanordnung in einem Schnitt gezeigt wird,
- Figur 2: die Anordnung aus Figur 1 aus einer anderen Perspektive, wobei ein Schließkörper und ein Schließkörperhalter der Ventilanordnung in einer teilweisen Schnittdarstellung herausgestellt sind, und
- Figur 3: die Anordnung aus Figur 1 aus einer noch anderen Perspektive, wobei der Schließkörper und der Schließkörperhalter in einer teilweisen Schnittdarstellung herausgestellt sind.

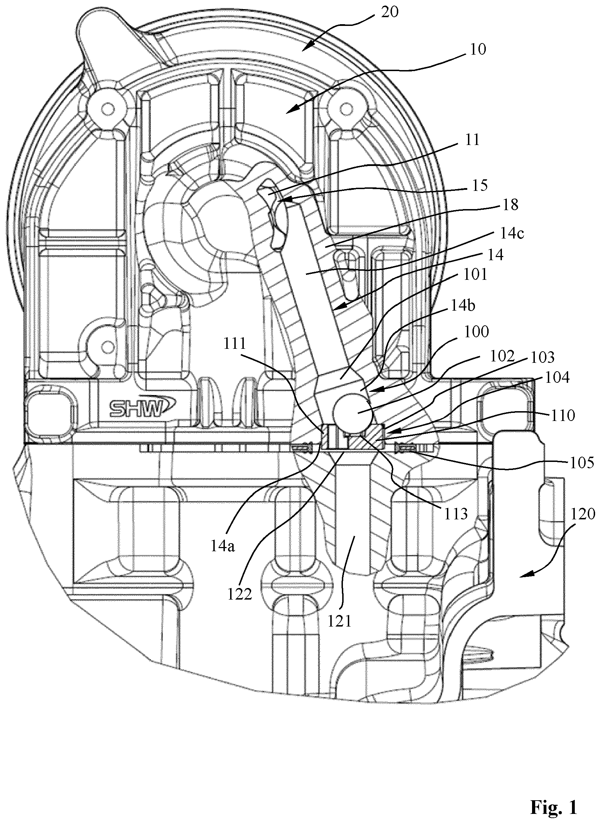

In den Figuren 1 bis 3 wird eine an einem zweiten Gehäuse 120, welches beispielsweise ein Getriebegehäuse sein kann, befestigte, insbesondere angeflanschte, Förderpumpe 10 gezeigt. Die Förderpumpe 10 ist Teil einer Pumpe-Motor-Einheit, welche die Förderpumpe 10 und einen Elektromotor 20 umfasst, der an einer Stirnseite der Förderpumpe 10 angebracht ist. Ein Rotor des Elektromotors 20 und ein Förderelement 11 der Förderpumpe 10 sind so miteinander gekoppelt, dass eine Drehung des Rotors eine Drehung des Förderelements 11 bewirkt. Insbesondere können der Rotor und das Förderelement 11 verdrehfest miteinander verbunden sein, das heißt, dass sich der Rotor und das Förderelement 11 mit derselben Drehzahl und in dieselbe Drehrichtung drehen. Alternativ kann zwischen Rotor und dem Förderelement 11 ein Getriebe angeordnet sein, wodurch sich das Förderelement 11 mit einer anderen Drehzahl und/oder in eine andere Drehrichtung als der Rotor dreht.

Die Förderpumpe 10 weist ein Gehäuse 18 auf, welches eine Pumpenkammer 15 bildet, in der das um seine Drehachse drehbare Förderelement 11 angeordnet ist. Das Gehäuse 18 kann ein- oder mehrteilig sein, wie zum Beispiel einen Gehäusegrundkörper, der die Pumpenkammer 15 bildet, und einen Gehäusedeckel, der die Pumpenkammer 15 stirnseitig, insbesondere zum Elektromotor 20 hin abdeckt, aufweisen. Das Förderelement 11 ist relativ zu dem Gehäuse 18 drehbar.

Das Gehäuse 18, beispielsweise ein Gehäusegrundkörper, bildet einen Fluidkanal 14, der mit einem Ende in die Pumpenkammer 15 und mit dem anderen Ende an eine Auslassöffnung 14a an einer Außenseite, insbesondere Unterseite, des Gehäuses 18 mündet. Von dem zweiten Gehäuse 120 wird ein zweiter Fluidkanal 121 gebildet, der mit einer Einlassöffnung 121 an eine Außenseite des Gehäuses 120 mündet. Die Einlassöffnung 122 und die Auslassöffnung 14a sind in Übereinstimmung miteinander angeordnet, das heißt, dass sie sich zumindest teilweise oder vollständig überdecken, wodurch Fluid aus der Pumpenkammer 15 über den Fluidkanal 14 und den Fluidkanal 121 zu einem Fluidverbraucher gefördert werden kann.

Eine Ventilanordnung 100 ist vorgesehen, welche angepasst ist, eine Fluidströmung in eine erste Fließrichtung des Fluids, nämlich von der Pumpenkammer 15 zu der Auslassöffnung 14a zuzulassen und in eine zweite, der ersten Richtung entgegengesetzte Richtung zu blockieren. Mithin handelt es sich bei der Ventilanordnung 100 um ein Rückschlagventil.

Der Fluidkanal 14 bildet einen Ventilsitz 101, welcher eine Innenumfangsfläche aufweist, welche in dem gezeigten Beispiel kegelstumpfförmig ausgebildet ist. In die erste Fließrichtung des zu fördernden Fluids schließt sich an den Ventilsitz 101 ein von dem Fluidkanal 14 gebildeter Aufnahmeraum 14b an, der in dem gezeigten Beispiel zylindrisch ausgebildet ist. Der Aufnahmeraum 14b nimmt einen kugelförmigen Schließkörper 102 auf, wobei sich der Schließkörper 102 in dem Aufnahmeraum 14b frei bewegen kann. In die erste Fließrichtung schließt sich an den Aufnahmeraum 14b eine von dem Fluidkanal 14 gebildete Schließkörperhalteraufnahme 104 an, welche eine Innenumfangswand 103 aufweist, welche beispielhaft zylindrisch ausgebildet ist. Die Längsachse der Schließkörperhalteraufnahme 104 ist schräg zu der Längsachse des Aufnahmeraums 14b und/oder des Ventilsitzes 101 und/oder des zwischen der Pumpenkammer 15 und dem Ventilsitz 101, insbesondere sich an den Ventilsitz 101 anschließenden, Abschnitt 14c des Fluidkanals 14 angeordnet. Insbesondere haben der Abschnitt 14c, der Ventilsitz 101 und der Aufnahmeraum 14b eine gemeinsame Längsachse. Beispielsweise können der Fluidkanal 121 und die Schließkörperhalteraufnahme 104 eine gemeinsame Längsachse aufweisen.

Die Ventilanordnung 100 weist ferner einen Schließkörperhalter 110 auf, der in der in den Figuren gezeigten Ausführung überwindbar reibschlüssig an der Innenumfangswand 103 des Fluidkanals 14 bzw. der Schließkörperhalteraufnahme 104 gehalten ist. Die in den Figuren gezeigte Ausführung kann alternativ so ausgebildet sein, dass der Schließkörperhalter 110 überwindbar formschlüssig an der Innenumfangswand 103 gehalten ist.

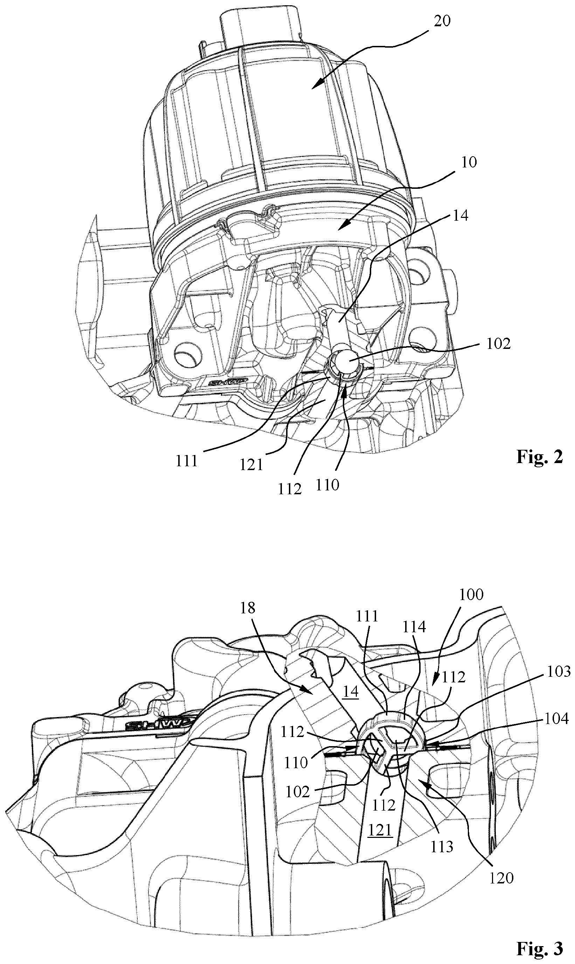

Wie am besten aus den Figuren 2 und 3 erkennbar ist, weist der Schließkörperhalter 110 einen ringförmigen Halteabschnitt 111 auf, mit dem der Schließkörperhalter 110 reibschlüssig an der Innenumfangswand 103 der Schließkörperhalteraufnahme 104 anliegt bzw. gehalten ist. In dem gezeigten Beispiel weist der Außenumfang des ringförmigen Halteabschnitts 111 mehrere über den Umfang verteilte Kontaktelemente 114, insbesondere Kontaktfelder oder Kontaktvorsprünge, auf, mit denen der ringförmige Halteabschnitt 111 in dem reibschlüssigen Kontakt mit der Innenumfangswand 103 gehalten wird. Beispielsweise können über den Umfang mindestens drei solche Kontaktelemente 114, vorzugsweise gleichmäßig verteilt, angeordnet sein. Durch die Kontaktelemente 114 wird eine definierte reibschlüssige Abstützung des Schließkörperhalters 110 an der Innenumfangswand 103 bewirkt. Die zwischen den Kontaktelementen 114 liegenden Abschnitte des Außenumfangs des ringförmigen Halteabschnitts 111 brauchen daher nicht zwingend an der Innenumfangswand 103 anliegen. In dem gezeigten Beispiel ist es sogar so, dass diese Abschnitte nicht an der Innenumfangswand 103 anliegen, sondern nur die Kontaktelemente 114.

Von einer Innenumfangsfläche des ringförmigen Halteabschnitts 111 ragen mehrere, in diesem Beispiel drei, Vorsprünge 112, beispielsweise radial nach innen, ab, die in dem von dem ringförmigen Halteabschnitt 111 eingefassten Bereich, nämlich in dessen Zentrum, miteinander verbunden sind. Die nach innen ragenden Vorsprünge 112 sind in dem gezeigten Beispiel stegförmig ausgebildet. Alternativ können die Vorsprünge 112 jeweils mit einem freien Ende nach innen, beispielsweise radial nach innen, ragen, so dass die freien Enden unverbunden sind.

Die Vorsprünge 112 weisen auf der zum Ventilsitz 101 zugewandten Seite eine Vertiefung 113 auf, welche am besten in den Figuren 1 und 3 erkennbar ist. Die Vertiefung 113 ist beispielhaft im Zentrum des von dem ringförmigen Halteabschnitt 111 eingefassten Bereichs gebildet. Die Vertiefung 113 ist dazu ausgebildet, dass sie den Schließkörper 102 teilweise aufnehmen kann, wenn dieser an dem Schließkörperhalter 110 bzw. den Vorsprüngen 112 anliegt, wie in Figur 1 gezeigt wird. Wenn der Schließkörper 102 in der Vertiefung 113 angeordnet ist, können seitliche Bewegungen des Schließkörpers 102 eingeschränkt werden, wodurch ein Klappern des Schließkörpers 102 in dem Aufnahmeraum 14b vermieden werden kann, was insbesondere beim Transport und/oder der Montage der Förderpumpe 10 von Vorteil sein kann. Die in Umfangsrichtung zwischen benachbarten Vorsprüngen 112 gebildeten Bereiche sind von einem ersten Ende bis zu einem zweiten Ende des Schließkörperhalters 110 durchgängig, so dass der Schließkörperhalter 110 von der Fluidströmung, insbesondere in die erste Strömungsrichtung, durchströmt werden kann, auch dann, wenn der Schließkörper 102 an dem Schließkörperhalter 110 anliegt, wie in der Figur 1 gezeigt wird. Wie am besten aus Figur 3 erkennbar ist, ist jeweils ein Kontaktelement 114 in etwa mittig zwischen zwei benachbarten Vorsprüngen 112 am Außenumfang des ringförmigen Halteabschnitts 111 angeordnet. Dadurch ist es möglich, dass der ringförmige Halteabschnitt 111 leichte nachgiebige, insbesondere elastische Bewegungen der Kontaktelemente 114 in radialer Richtung zulässt, wodurch die aufgrund des Reibschlusses zwischen den Kontaktfeldern 114 und der Innenumfangswand 103 ergebende Reib- oder Haltekraft gut definierbar ist.

Wie am besten aus Figur 3 erkennbar ist, ist dort, wo die Vorsprünge 112 in den Halteabschnitt 111 münden, am Außenumfang des Halteabschnitts 111 jeweils eine Kerbe oder Vertiefung gebildet, welche bewirkt, dass eine Materialanhäufung am Übergang des Vorsprungs 112 zum Halteabschnitt 111 vermieden wird. Ferner kann dadurch vermieden werden, dass der Halteabschnitt 111 an diesen Stellen an der Innenumfangswand 103 anliegt.

Der Innendurchmesser des Aufnahmearms 14b ist größer als der Außendurchmesser des Schließkörpers 102. Der Innendurchmesser des Ventilsitzes 101 am Übergang des Ventilsitzes 101 zu dem zwischen der Pumpenkammer 15 und dem Ventilsitz 101 befindlichen Abschnitt 14c des Fluidkanals 14 ist kleiner als der Außendurchmesser des Schließkörpers und/oder kleiner als der Innendurchmesser des Halteabschnitts 14b. Der Schließkörper 102 kann in dem Aufnahmeraum 14b zwischen einer Position, in der er an dem Ventilsitz 101 anliegt und einer Position, in der er an dem Schließkörperhalter 110 anliegt, frei hin und her bewegt werden. Mithin ist der Schließkörper 102 ohne Federbeaufschlagung angeordnet. Die Ventilanordnung 100 ist als federloses Ventil oder Rückschlagventil ausgebildet.

Der Schließkörper 102 ist konfiguriert, in einer Position, in der er an dem Ventilsitz 101 anliegt, insbesondere mit einer umlaufenden, ringförmigen Kontaktlinie anliegt, eine Fluidströmung in die zweite Richtung zu verhindern und, wenn der Schließkörper 102 von dem Ventilsitz 101 zumindest teilweise abgehoben ist, eine Fluidströmung in die erste Richtung zuzulassen. Wenn Fluid aus der Pumpenkammer 15 zu der Auslassöffnung 14a gefördert wird, wird durch die fluiddynamischen Kräfte der Schließkörper 102 von dem Ventilsitz 101 abgehoben. Falls Fluid in die entgegengesetzte Richtung fließen sollte, wird durch die fluiddynamischen Kräfte der Schließkörper 102 gegen den Ventilsitz 101 bewegt, wodurch eine Fluidströmung in die zweite Richtung blockiert wird.

Für die Montage wird der Schließkörper 102 in den Aufnahmeraum 14b eingelegt. Anschließend wird der Schließkörperhalter 110 in die Schließkörperhalteraufnahme 104 eingesetzt und dort reibschlüssig gehalten. Dadurch wird ein Herausfallen des Schließkörpers 102 aus dem Aufnahmeraum 14b verhindert. Der Reibschluss ist so dimensioniert, dass die beim Transport und/oder der Montage der Förderpumpe 10 auf den Schließkörper 102 und den Schließkörperhalter 110 wirkenden Kräfte nicht ausreichen, den Schließkörperhalter 110 relativ zu dem Gehäuse 18 zu verschieben.

Die Förderpumpe 10 kann nun an dem Gehäuse 120 befestigt werden, insbesondere mittels mehrerer Schraubenbolzen angeschraubt werden. Zwischen dem Gehäuse 18 und dem Gehäuse 120 wird eine Dichtung 105, insbesondere eine ringförmige Dichtung, eingelegt. Die Dichtung 105 umgibt den Bereich zwischen der Auslassöffnung 14a und der Einlassöffnung 122 umfangsseitig oder ringförmig, so dass dieser Bereich nach außen hin abgedichtet wird.

Vor der ersten Inbetriebnahme der Pumpe 10 besteht zwischen dem Schließkörperhalter 110 und dem Gehäuse 120 ein axialer Spalt. Die während des Betriebs der Pumpe 10 auf den Schließkörper 102 und den Schließkörperhalter 110 wirkende fluiddynamische Kräfte können den Schließkörperhalter 111 aus einer ersten Halteposition, in der er reibschlüssig an der Innenumfangswand 103 des Fluidkanals 114 gehalten ist, in die erste Richtung in eine zweite Halteposition verschieben, in der der Schließkörperhalter 110 an dem Gehäuse 120, insbesondere axial, anstößt oder anliegt, wodurch eine Bewegung des Schließkörperhalters 110 in die erste Richtung, insbesondere formschlüssig, durch das Gehäuse 120 blockiert wird. Der Weg, um den der Schließkörperhalter 110 aus der ersten Halteposition in die zweite Halteposition zurücklegt, entspricht der Spaltbreite des anfangs zwischen dem Schließkörperhalter 110 und dem Gehäuse 120 bestehenden axialen Spalts.

In der zweiten Halteposition wird der Schließkörperhalter 110 weiterhin reibschlüssig an der Innenumfangswand 3 gehalten, wodurch eine Bewegung des Schließkörperhalters 110 aus der zweiten Halteposition zurück in die erste Halteposition verhindert wird.

Der Schließkörperhalter 110 ist einfach herzustellen und zu montieren. Daher ergibt sich eine Ventilanordnung, die Fehlerquellen bei der Montage minimiert und andererseits sehr kostengünstig herstellbar ist.

### Bezugszeichenliste

- 11: Förderelement
- 14: Fluidkanal
- 14a: Auslassöffnung
- 14b: Aufnahmeraum
- 14c: Abschnitt
- 15: Pumpenkammer
- 18: erstes Gehäuse

- 20: Elektromotor

- 100: Ventilanordnung
- 101: Ventilsitz
- 102: Schließkörper
- 103: Innenwand
- 104: Schließkörperhalteraufnahme
- 105: Dichtung

- 110: Schließkörperhalter
- 111: Halteabschnitt
- 112: Vorsprung
- 113: Vertiefung
- 114: Kontaktelement, insbesondere Kontaktfeld oder Kontaktvorsprung

- 120: separates Bauteil / zweites Gehäuse / Getriebegehäuse
- 121: Fluidkanal
- 122: Einlassöffnung

## Patentansprüche

1. Ventilanordnung (100), welche angepasst ist, eine Fluidströmung in eine erste Richtung zuzulassen und in eine zweite, der ersten Richtung entgegengesetzte Richtung zu blockieren, wobei die Ventilanordnung (100) umfasst:
- einen Fluidkanal (14), einen Ventilsitz (101) und einen in dem Fluidkanal (14) angeordneten, beispielsweise rotationssymmetrischen oder kugelförmigen, Schließkörper (102), wobei der Schließkörper (102) konfiguriert ist, in einer Position, in der er an dem Ventilsitz (101) anliegt, eine Fluidströmung in die zweite Richtung zu verhindern und, wenn der Schließkörper (102) von dem Ventilsitz (101) abgehoben ist, eine Fluidströmung in die erste Richtung zuzulassen,
- einen in dem Fluidkanal (14) angeordneten Schließkörperhalter (110), der konfiguriert ist, in einer Position des Schließkörpers (102), in der der Schließkörper (102) von dem Ventilsitz (101) abgehoben ist, eine Bewegung des Schließkörpers (102) in die erste Richtung einzuschränken,
**dadurch gekennzeichnet, dass**
- der Schließkörperhalter (110) überwindbar reibschlüssig oder überwindbar formschlüssig an einer Innenumfangswand (103) des Fluidkanals (14) gehalten ist, so dass die Haltekraft der reib- oder formschlüssigen Verbindung von einer im Betrieb einer Förderpumpe auf den Schließkörperhalter (110) wirkenden, von der Fluidströmung im Fluidkanal (14) verursachten Kraft überwunden werden kann, um die formschlüssige oder reibschlüssige Verbindung zu lösen und den Schließkörperhalter (110) zu verschieben.

2. Ventilanordnung (100) nach Anspruch 1, **dadurch gekennzeichnet, dass** der
Schließkörperhalter (110) konfiguriert ist, von einer Fluidströmung durchströmt zu werden; und/oder
dass der Schließkörper (102) an dem Schließkörperhalter (110) anliegt, wenn der Schließkörperhalter (110) die Bewegung des Schließkörpers (102) einschränkt oder blockiert.

3. Ventilanordnung (100) nach dem vorhergehenden Anspruch, **dadurch gekennzeichnet, dass** der Schließkörper (102) frei zwischen seiner Position, in der er an dem Ventilsitz (101) anliegt, und seiner Position, in der er an dem Schließkörperhalter (110) anliegt, bewegbar ist; und/oder
dass der Schließkörper (102) an dem Schließkörperhalter (110) nicht anliegt oder in keiner mechanischen Wechselwirkung mit dem Schließkörperhalter (110) ist, wenn der Schließkörper (102) in der Position ist, in der er an dem Ventilsitz (101) anliegt.

4. Ventilanordnung (100) nach einem der vorhergehenden Ansprüche, **dadurch gekennzeichnet, dass** der Schließkörper (102) ohne Federbeaufschlagung angeordnet ist oder die Ventilanordnung (100) als federloses Rückschlagventil ausgebildet ist.

5. Ventilanordnung (100) nach einem der vorhergehenden Ansprüche, **dadurch gekennzeichnet, dass** der Schließkörperhalter (110) aus einer ersten Halteposition, in der er reibschlüssig oder überwindbar formschlüssig an der Innenumfangswand (103) des Fluidkanals (14) gehalten ist, in die erste Richtung in eine zweite Halteposition, in der eine Bewegung des Schließkörperhalters (110) in die erste Richtung blockiert ist, verschiebbar ist.

6. Ventilanordnung (100) nach dem vorhergehenden Anspruch, **dadurch gekennzeichnet, dass** der Weg, den der Schließkörper (102) von der Position, in der er an dem Ventilsitz (101) anliegt, bis zu einer Position, in der der Schließkörper (102) an dem Schließkörperhalter (110) anliegt, bewegt werden kann, in der zweiten Halteposition größer ist als in der ersten Halteposition.

7. Ventilanordnung (100) nach einem der zwei vorhergehenden Ansprüche, **dadurch gekennzeichnet, dass** der Schließkörperhalter (110) in der zweiten Halteposition reibschlüssig an der Innenumfangswand (103) des Fluidkanals (14) und/oder formschlüssig an der Innenumfangswand (103) des Fluidkanals (14) oder einem von der Innenumfangswand (103) des Fluidkanals (14) separaten Bauteils, an dem sich der Schließkörperhalter (110) in die erste Richtung abstützt, gehalten wird.

8. Ventilanordnung (100) nach einem der vorhergehenden Ansprüche, **dadurch gekennzeichnet, dass** der Reibschluss zwischen Innenumfangswand (103) und Schließkörperhalter (110) so konfiguriert ist, dass die Kraft, die zum Überwinden des Reibschlusses oder des überwindbaren Formschlusses erforderlich ist, größer ist als die Summe der Gewichtskräfte des Schließkörperhalters (110) und des Schließkörpers (102).

9. Ventilanordnung (100) nach einem der vorhergehenden Ansprüche, **dadurch gekennzeichnet, dass** der Reibschluss oder der überwindbare Formschluss zwischen Innenumfangswand (103) und Schließkörperhalter (110) so konfiguriert ist, dass die Kraft, die zum Überwinden des Reibschlusses oder Formschlusses erforderlich ist, kleiner ist als eine von Fluidströmung in dem Fluidkanal (14) auf den Schließkörper (102) ausübbare oder ausgeübte Kraft.

10. Ventilanordnung (100) nach einem der vorhergehenden Ansprüche, **dadurch gekennzeichnet, dass** der Schließkörperhalter (110) einen, insbesondere ringförmigen, Halteabschnitt (111) aufweist, mit dem der Schließkörperhalter (110) reibschlüssig oder überwindbar formschlüssig an der Innenumfangswand (103) des Fluidkanals (14) gehalten ist, wobei bevorzugt ist, dass von einem Innenumfang des ringförmigen Halteabschnitts (111) ein oder mehrere Vorsprünge (112), insbesondere Stege, nach innen ragen, wobei beispielsweise die nach innen ragenden Vorsprünge (112) in dem von dem ringförmigen Halteabschnitt (111) eingefassten Bereich, insbesondere in dessen Zentrum, miteinander verbunden sind.

11. Ventilanordnung (100) nach dem vorhergehenden Anspruch, **dadurch gekennzeichnet, dass** der Schließkörper (102) an dem einen oder den mehreren Vorsprüngen (112) anliegt, wenn der Schließkörperhalter (110) die Bewegung des Schließkörpers (110) einschränkt oder blockiert, und/oder der eine oder die mehreren Vorsprünge (112) auf der zu dem Ventilsitz (101) zugewandten Seite eine Vertiefung bilden, in der der Schließkörper (102) teilweise aufnehmbar ist.

12. Ventilanordnung nach einem der zwei vorhergehenden Ansprüche, **dadurch gekennzeichnet, dass** ein Außenumfang des ringförmigen Halteabschnitts (111) mehrere über den Umfang verteilte Kontaktelemente (114), insbesondere Kontaktfelder oder Kontaktvorsprünge, aufweist, mit denen der ringförmige Halteabschnitt (111) in dem reibschlüssigen oder überwindbar formschlüssigen Kontakt mit der Innenumfangswand (103) gehalten wird.

13. Förderpumpe (10), umfassend:
- eine Ventilanordnung (100) nach einem der vorhergehenden Ansprüche,
- eine Pumpenkammer (15) und ein um eine Drehachse drehbaren Förderelement (11), welches in der Pumpenkammer (15) angeordnet ist, wobei über den Fluidkanal (14), der beispielsweise mit einem Ende in die oder zu der Pumpenkammer (15) und mit dem anderen Ende an eine Auslassöffnung (14a) mündet, Fluid aus der Pumpenkammer (15) zu der Auslassöffnung (14a) förderbar ist, wobei die Ventilanordnung (100) in dem Fluidkanal (14) angeordnet oder zumindest teilweise von dem Fluidkanal (14) gebildet ist.

14. Förderpumpe (10) nach dem vorhergehenden Anspruch, **dadurch gekennzeichnet, dass** der Ventilsitz (101) von dem Fluidkanal (14) gebildet ist oder in den Fluidkanal (14) eingesetzt ist.

15. Förderpumpe (10) nach einem der zwei vorhergehenden Ansprüche, ferner umfassend ein erstes Gehäuse (18) , welches den Fluidkanal (14), nämlich einen ersten Fluidkanal (14), bildet, und ein zweites Gehäuse (120) , an dem das erste Gehäuse (18) befestigt ist, wobei das zweite Gehäuse (120) einen zweiten Fluidkanal (121) mit einer Einlassöffnung (122) aufweist, die in Übereinstimmung mit der Auslassöffnung (14a) des ersten Fluidkanals (14) angeordnet ist, wobei der Schließkörperhalter (110) aus einer ersten Halteposition, in der er reibschlüssig an der Innenumfangswand (103) des ersten Fluidkanals (14) gehalten ist, in die erste Richtung in eine zweite Halteposition, in der eine Bewegung des Schließkörperhalters (110) in die erste Richtung dadurch blockiert wird, dass der Schließkörperhalter (110) axial an dem zweiten Gehäuse (120) anliegt, bewegbar ist.

## Claims

1. A valve arrangement (100), adapted to allow a fluid flow in a first direction and to block it in a second direction which is opposite to the first direction, wherein the valve arrangement (100) comprises:
- a fluid channel (14), a valve seat (101) and a closing body (102) which is arranged in the fluid channel (14) and is for example rotationally symmetrical or spherical, wherein the closing body (102) is configured to prevent a fluid flow in the second direction in a position in which it rests against the valve seat (101) and to allow a fluid flow in the first direction when the closing body (102) is lifted off the valve seat (101); and
- a closing body holder (110) which is arranged in the fluid channel (14) and configured to restrict a movement of the closing body (102) in the first direction in a position of the closing body (102) in which the closing body (102) is lifted off the valve seat (101),
**characterised in that**
- the closing body holder (110) is held on an inner circumferential wall (103) of the fluid channel (14) in a surmountable frictional fit or in a surmountable positive fit, such that the holding force of the frictional-fit or positive-fit connection can be surmounted by a force which is caused by the fluid flow in the fluid channel (14) and acts on the closing body holder (110) while a delivery pump is in operation, in order to release the frictional-fit or positive-fit connection and move the closing body holder (110).

2. The valve arrangement (100) according to claim 1, **characterised in that** the closing body holder (110) is configured for a fluid flow to flow through it and/or **in that** the closing body (102) rests against the closing body holder (110) when the closing body holder (110) restricts or blocks the movement of the closing body (102).

3. The valve arrangement (100) according to the preceding claim, **characterised in that**
the closing body (102) can be freely moved between its position in which it rests against the valve seat (101) and its position in which it rests against the closing body holder (110) and/or **in that**
the closing body (102) does not rest against the closing body holder (110) or is without any mechanical interaction with the closing body holder (110) when the closing body (102) is in the position in which it rests against the valve seat (101).

4. The valve arrangement (100) according to any one of the preceding claims, **characterised in that** the closing body (102) is arranged without being spring-loaded, or the valve arrangement (100) is designed as a reflux valve with no spring.

5. The valve arrangement (100) according to any one of the preceding claims, **characterised in that** the closing body holder (110) can be moved in the first direction from a first holding position, in which it is held on the inner circumferential wall (103) of the fluid channel (14) in a frictional fit or a surmountable positive fit, into a second holding position in which a movement of the closing body holder (110) in the first direction is blocked.

6. The valve arrangement (100) according to the preceding claim, **characterised in that** the distance which the closing body (102) can be moved from the position in which it rests against the valve seat (101) to a position in which the closing body (102) rests against the closing body holder (110) is larger in the second holding position than in the first holding position.

7. The valve arrangement (100) according to any one of the preceding two claims, **characterised in that** in the second holding position, the closing body holder (110) is held in a frictional fit on the inner circumferential wall (103) of the fluid channel (14) and/or in a positive fit on the inner circumferential wall (103) of the fluid channel (14) or on a component which is separate from the inner circumferential wall (103) of the fluid channel (14) and on which the closing body holder (110) is supported in the first direction.

8. The valve arrangement (100) according to any one of the preceding claims, **characterised in that** the frictional fit between the inner circumferential wall (103) and the closing body holder (110) is configured such that the force required to surmount the frictional fit or the surmountable positive fit is greater than the sum of the weight forces of the closing body holder (110) and the closing body (102).

9. The valve arrangement (100) according to any one of the preceding claims, **characterised in that** the frictional fit or the surmountable positive fit between the inner circumferential wall (103) and the closing body holder (110) is configured such that the force required to surmount the frictional fit or the positive fit is smaller than a force which is or can be exerted on the closing body (102) by the fluid flow in the fluid channel (14).

10. The valve arrangement (100) according to any one of the preceding claims, **characterised in that** the closing body holder (110) has a holding segment (111), in particular an annular holding segment (111), using which the closing body holder (110) is held on the inner circumferential wall (103) of the fluid channel (14) in a frictional fit or a surmountable positive fit, wherein one or more projections (112), in particular stays, preferably protrude inwardly from an inner circumference of the annular holding segment (111), wherein the inwardly protruding projections (112) are for example connected to one another in the region enclosed by the annular holding segment (111) and in particular in its centre.

11. The valve arrangement (100) according to the preceding claim, **characterised in that** the closing body (102) rests against the one or more projections (112) when the closing body holder (110) restricts or blocks the movement of the closing body (102), and/or the one or more projections (112) form a recess (113), in which the closing body (102) can be partially accommodated, on the side facing the valve seat (101).

12. The valve arrangement (100) according to any one of the preceding two claims, **characterised in that** an outer circumference of the annular holding segment (111) has a plurality of contact elements (114), in particular contact fields or contact projections, which are distributed over the circumference and hold the annular holding segment (111) in frictional-fit or surmountable positive-fit contact with the inner circumferential wall (103).

13. A delivery pump (10), comprising:
- a valve arrangement (100) according to any one of the preceding claims; and
- a pump chamber (15) and a delivery element (11) which can be rotated about an axis of rotation and which is arranged in the pump chamber (15), wherein fluid can be delivered from the pump chamber (15) to an outlet opening (14a) via the fluid channel (14) which for example opens into or up to the pump chamber (15) at one end and onto the outlet opening (14a) at the other end, wherein the valve arrangement (100) is arranged in the fluid channel (14) or is at least partially formed by the fluid channel (14).

14. The delivery pump (10) according to the preceding claim, **characterised in that** the valve seat (101) is formed by the fluid channel (14) or is inserted into the fluid channel (14).

15. The delivery pump (10) according to any one of the preceding two claims, further comprising: a first housing (18) which forms the fluid channel (14), namely a first fluid channel (14); and a second housing (120) to which the first housing (18) is fastened, wherein the second housing (120) has a second fluid channel (121) comprising an inlet opening (122) which is arranged in accordance with the outlet opening (14a) of the first fluid channel (14), wherein the closing body holder (110) can be moved in the first direction from a first holding position, in which it is held on the inner circumferential wall (103) of the first fluid channel (14) in a frictional fit, into a second holding position in which a movement of the closing body holder (110) in the first direction is blocked because the closing body holder (110) rests axially against the second housing (120).

## Revendications

1. Ensemble de soupape (100) adapté pour permettre un écoulement de fluide dans une première direction et pour le bloquer dans une seconde direction opposée à la première direction, l'ensemble de soupape (100) comprenant :
- un canal de fluide (14), un siège de soupape (101) et un corps de fermeture (102), par exemple un corps de fermeture à symétrie de rotation ou un corps de fermeture sphérique, disposé dans le canal de fluide (14), le corps de fermeture (102) étant configuré pour empêcher un écoulement de fluide dans la seconde direction dans une position dans laquelle il s'applique contre le siège de soupape (101) et pour permettre un écoulement de fluide dans la première direction lorsque le corps de fermeture (102) est soulevé du siège de soupape (101) ; et
- un support de corps de fermeture (110) disposé dans le canal de fluide (14) et configuré pour restreindre un mouvement du corps de fermeture (102) dans la première direction dans une position du corps de fermeture (102) dans laquelle le corps de fermeture (102) est soulevé du siège de soupape (101),
**caractérisé en ce que**
- le support de corps de fermeture (110) est maintenu sur une paroi circonférentielle intérieure (103) du canal de fluide (14) par liaison de friction surmontable ou par liaison de formes complémentaires surmontable, de sorte que la force de maintien de la liaison par friction ou de la liaison par formes complémentaires peut être surmontée par une force entraînée par l'écoulement de fluide dans le canal de fluide (14) et agissant sur le support de corps de fermeture (110) lorsqu'une pompe de refoulement est en fonctionnement, afin de libérer la liaison par formes complémentaires ou la liaison par friction et de déplacer le support de corps de fermeture (110).

2. Ensemble de soupape (100) selon la revendication 1, **caractérisé en ce que** le
support de corps de fermeture (110) est configuré pour être traversé par un écoulement de fluide et/ou
le corps de fermeture (102) s'applique contre le support de corps de fermeture (110) lorsque le support de corps de fermeture (110) restreint ou bloque le mouvement du corps de fermeture (102).

3. Ensemble de soupape (100) selon la revendication précédente, **caractérisé en ce que** le corps de fermeture (102) est mobile librement entre sa position dans laquelle il s'applique contre le siège de soupape (101) et sa position dans laquelle il s'applique contre le support de corps de fermeture (100) et / ou
le corps de fermeture (102) ne s'applique pas contre le support de corps de fermeture (110) ou n'a aucune interaction mécanique avec le support de corps de fermeture (110) lorsque le corps de fermeture (102) est dans la position dans laquelle il s'applique contre le siège de soupape (101).

4. Ensemble de soupape (100) selon l'une quelconque des revendications précédentes, **caractérisé en ce que** le corps de fermeture (102) est disposé sans sollicitation de ressorts ou l'ensemble de soupape (100) est réalisé en tant que clapet anti-retour sans ressort.

5. Ensemble de soupape (100) selon l'une quelconque des revendications précédentes, **caractérisé en ce que** le support de corps de fermeture (110) est déplaçable dans la première direction depuis une première position de maintien dans laquelle il est maintenu sur la paroi circonférentielle intérieure (103) du canal de fluide (14) par liaison de friction ou par liaison de formes complémentaires surmontable vers une seconde position de maintien dans laquelle est bloqué un mouvement du support de corps de fermeture (110) dans la première direction.

6. Ensemble de soupape (100) selon la revendication précédente, **caractérisé en ce que** le trajet que le corps de fermeture (102) peut être déplacé depuis la position dans laquelle il s'applique contre le siège de soupape (101) jusqu'à une position dans laquelle le corps de fermeture (102) s'applique contre le support de corps de fermeture (110) est plus grand dans la seconde position de maintien que dans la première position de maintien.

7. Ensemble de soupape (100) selon l'une quelconque des deux revendications précédentes, **caractérisé en ce que** le support de corps de fermeture (110) dans la seconde position de maintien est maintenu par liaison de friction sur la paroi circonférentielle intérieure (103) du canal de fluide (14) et / ou par liaison de formes complémentaires sur la paroi circonférentielle intérieure (103) du canal de fluide (14) ou sur un composant séparé de la paroi circonférentielle intérieure (103) du canal de fluide (14) sur lequel s'appuie le support de corps de fermeture (110) dans la première direction.

8. Ensemble de soupape (100) selon l'une quelconque des revendications précédentes, **caractérisé en ce que** la liaison par friction entre la paroi circonférentielle intérieure (103) et le support de corps de fermeture (110) est configurée de sorte que la force nécessaire pour surmonter la liaison par friction ou la liaison par formes complémentaires surmontable est supérieure à la somme des forces de poids du support de corps de fermeture (110) et du corps de fermeture (102).

9. Ensemble de soupape (100) selon l'une quelconque des revendications précédentes, **caractérisé en ce que** la liaison par friction ou la liaison par formes complémentaires surmontable entre la paroi circonférentielle intérieure (103) et le support de corps de fermeture (110) est configurée de sorte que la force nécessaire pour surmonter la liaison par friction ou la liaison par formes complémentaires est inférieure à une force exerçable ou exercée sur le corps de fermeture (102) par l'écoulement de fluide dans le canal de fluide (14).

10. Ensemble de soupape (100) selon l'une quelconque des revendications précédentes, **caractérisé en ce que** le support de corps de fermeture (110) comporte une partie de maintien (111), en particulier une partie de maintien annulaire (111), qui maintient le support de corps de fermeture (110) sur la paroi circonférentielle intérieure (103) du canal de fluide (14) par liaison de friction ou par liaison de formes complémentaires surmontable, une ou plusieurs saillies (112), en particulier une ou plusieurs traverses, faisant de préférence saillie vers l'intérieur à partir d'une circonférence intérieure de la partie de maintien annulaire (111), les saillies (112) faisant saillie vers l'intérieur étant par exemple reliées les unes aux autres dans la zone entourée par la partie de maintien annulaire (111), en particulier à son centre.

11. Ensemble de soupape (100) selon la revendication précédente, **caractérisé en ce que** le corps de fermeture (102) s'applique contre ladite ou lesdites saillies (112) lorsque le support de corps de fermeture (110) restreint ou bloque le mouvement du corps de fermeture (102), et / ou ladite ou lesdites saillies (112) forment une cavité (113), dans laquelle le corps de fermeture (102) peut être partiellement reçu,
sur le côté faisant face au siège de soupape (101).

12. Ensemble de soupape (100) selon l'une quelconque des deux revendications précédentes, **caractérisé en ce qu'**une circonférence extérieure de la partie de maintien annulaire (111) comporte plusieurs éléments de contact (114), en particulier plusieurs champs de contact ou saillies de contact, répartis sur la circonférence, qui maintiennent la partie de maintien annulaire (111) en contact par liaison de friction ou en contact par liaison de formes complémentaires surmontable avec la paroi circonférentielle intérieure (103).

13. Pompe de refoulement (10), comprenant :
- un ensemble de soupape (100) selon l'une quelconque des revendications précédentes ; et
- une chambre de pompe (15) et un élément de refoulement (11) rotatif autour d'un axe de rotation et disposé dans la chambre de pompe (15), du fluide pouvant être refoulé depuis la chambre de pompe (15) vers une ouverture de sortie (14a) par l'intermédiaire du canal de fluide (14) dont par exemple l'une extrémité débouche dans ou vers la chambre de pompe (15) et l'autre extrémité débouche sur l'ouverture de sortie (14a), l'ensemble de soupape (100) étant disposé dans le canal de fluide (14) ou formé au moins partiellement par le canal de fluide (14).

14. Pompe de refoulement (10) selon la revendication précédente, **caractérisée en ce que** le siège de soupape (101) est formé par le canal de fluide (14) ou inséré dans le canal de fluide (14).

15. Pompe de refoulement (10) selon l'une quelconque des deux revendications précédentes, comprenant en outre un premier boîtier (18) formant le canal de fluide (14), à savoir un premier canal de fluide (14), et un second boîtier (120) auquel est fixé le premier boîtier (18), le second boîtier (120) comportant un second canal de fluide (121) avec une ouverture d'entrée (122) disposée conformément à l'ouverture de sortie (14a) du premier canal de fluide (14), le support de corps de fermeture (110) étant déplaçable dans la première direction depuis une première position de maintien, dans laquelle il est maintenu sur la paroi circonférentielle intérieure (103) du premier canal de fluide (14) par liaison de friction, vers une seconde position de maintien dans laquelle un mouvement du support de corps de fermeture (110) dans la première direction est bloqué par le fait que le support de corps de fermeture (110) s'applique axialement contre le second boîtier (120).
